# EUROPÄISCHE PATENTSCHRIFT

(11) **EP 3 030 450 B1**
(45) Veröffentlichungstag und Bekanntmachung des Hinweises auf die Patenterteilung: **31.01.2018**
(21) Anmeldenummer: 14747838.2
(22) Anmeldetag: 30.07.2014
(51) Int. Cl.: B60L 5/38, B61L 1/00, B60M 3/00, B61L 25/00, H04B 3/60

(54) **VERFAHREN ZUM HERSTELLEN, INSBESONDERE KONFIGURIEREN, EINES SYSTEMS, UMFASSEND EINE SCHLEIFLEITUNG UND EIN GERÄT, UND VORRICHTUNG ZUR DURCHFÜHRUNG DES VERFAHRENS**
METHOD FOR PRODUCING, IN PARTICULAR CONFIGURING, A SYSTEM, COMPRISING A CONTACT LINE AND AN APPARATUS, AND DEVICE FOR PERFORMING THE METHOD
PROCÉDÉ DE FABRICATION, NOTAMMENT DE CONFIGURATION, D'UN SYSTÈME COMPRENANT UNE LIGNE DE CONTACT ET UN APPAREIL, ET DISPOSITIF DESTINÉ À METTRE EN UVRE LE PROCÉDÉ

(30) Priorität: 06.08.2013 DE 102013013017
(43) Veröffentlichungstag der Anmeldung: 15.06.2016
(73) Patentinhaber: Sew-Eurodrive GmbH & Co. KG, 76646 Bruchsal (DE)
(72) Erfinder: SCHULZ, Heiko, 76532 Baden-Baden (DE); ENENKEL, Ronny, 76187 Karlsruhe (DE); BUND, Martin, 76139 Karlsruhe (DE); SCHÖPFER, Claus, 69168 Wiesloch (DE)
(86) Internationale Anmeldenummer: PCT/EP2014/002078
(87) Internationale Veröffentlichungsnummer: WO 2015/018506

(56) Entgegenhaltungen:
- WO-A1-2007/087996
- DE-A1- 4 202 275
- FR-A1- 2 146 332
- FR-A5- 2 171 784

## Beschreibung

Die Erfindung betrifft ein Verfahren zum Herstellen, insbesondere Konfigurieren, eines Systems, umfassend eine Schleifleitung und ein Gerät, und eine Vorrichtung zur Durchführung des Verfahrens.

Es ist allgemein bekannt, dass Information und Energie über Schleifleitung übertragbar sind an Schienenfahrzeuge, wobei an der Schiene, entlang welcher die Schienenfahrzeuge bewegbar sind, eine Schleifleitung angeordnet ist, insbesondere parallel zur Schiene.

Aus der FR 2 171 784 A5 ist als nächstliegender Stand der Technik ein System mit einem mittels Schleifleitung versorgbarem Gerät bekannt.

Aus der DE 42 02 275 A1 ist ein Verfahren zur Signalübertragung zwischen einer bewegten oder ortsfesten Zentraleinheit und mindestens einem beweglichen Objekt bekannt.

Aus der FR 2 146 332 A1 ist eine Anordnung zurm Übertragen elektrischer Steuersignale an ein bewegbares Teil bekannt.

Aus der WO 2007/087996 A1 ist ein System zur berührungslosen Energie- und Datenübertragung bekannt, wobei das Datensignal und das Energiesignal abwechselnd übertragen werden.

Der Erfindung liegt daher die Aufgabe zugrunde, einen vereinfachten Betrieb zu erreichen.

Erfindungsgemäß wird die Aufgabe bei dem Verfahren zum Herstellen nach den in Anspruch 1 und bei der Vorrichtung zur Durchführung des Verfahrens nach den in Anspruch 7 angegebenen Merkmalen gelöst.

Wichtige Merkmale der Erfindung bei dem Verfahren sind, dass das Verfahren zum Herstellen, insbesondere Konfigurieren, eines Systems, eine Schleifleitung und ein Gerät umfasst,
wobei das Gerät mittels der Schleifleitung versorgbar ist und Informationen über die Schleifleitung vom Gerät sendbar und/oder empfangbar sind,
wobei die Schleifleitung zumindest einen ersten, zweiten, vierten und fünften Schleifleiter aufweist, die mit einem jeweiligen Anschlusselement des Geräts verbunden sind,
wobei der erste und zweite Schleifleiter eine jeweilige Phase der das Gerät versorgenden Wechselspannung aufweist,
wobei der vierte Schleifleiter zum Senden von Information vorgesehen ist und der fünfte Schleifleiter zum Empfangen von Information vorgesehen ist,
wobei eine der Phasen insbesondere also die als Meldephase fungierende Phase, mit einem ersten Anschlusselement elektrisch verbunden wird, insbesondere wobei das erste Anschlusselement mit einer entsprechenden Markierung oder Kennzeichnung versehen wird bei Herstellung des Geräts,
wobei ein steuerbarer Schalter, insbesondere Halbleiterschalter, des Geräts das erste Anschlusselement zeitabschnittsweise elektrisch verbindet mit dem mit dem vierten Schleifleiter verbundenen Anschlusselement oder diese Verbindung trennt,
insbesondere wobei dem Schalter zumindest eine Diode in Reihe zugeordnet ist.

Von Vorteil ist dabei, dass Information austauschbar ist zwischen dem Fahrzeug und einer stationär angeordneten Steuerung, welche eine Meldeauswerteeinheit und eine Kommandoeinheit aufweist. Die Verdrahtung bei Inbetriebnahme ist einfach. Außerdem ist das Gerät flexibel einsetzbar. An die erste, als Meldephase gekennzeichnete Anschlussklemme wird die Meldephase angeschlossen.

Bei einer vorteilhaften Ausgestaltung wird die am fünften Schleifleiter anliegende Spannung einem Mittel zur Erfassung von Spannung zugeführt und der erfasste Spannungsverlauf wird verglichen mit dem Spannungsverlauf zumindest einer der das Gerät versorgenden Phasen, insbesondere mit zumindest einer der Phasen der das Gerät versorgenden Wechselspannung, verglichen,

und daraus die am fünften Schleifleiter jeweils anliegende Phase der Wechselspannung und/oder das Vorzeichen des Spannungsverlaufs einer jeweils am fünften Schleifleiter anliegenden Phase der Wechselspannung bestimmt,

insbesondere wobei eine stationär angeordnete elektronische Schaltung, insbesondere übergeordnete Steuerung, den fünften Schleifleiter zeitabschnittsweise mit einer der Phasen elektrisch verbindet. Von Vorteil ist dabei, dass Informationen vom Gerät empfangbar sind.

Bei einer vorteilhaften Ausgestaltung ist bei der Inbetriebnahme des Geräts in einem Speicher des Geräts die Zuordnung der jeweiligen Phase zu einem jeweiligen Anschlusselement hinterlegbar, insbesondere als Parameter. Von Vorteil ist dabei, dass das Gerät flexibel konfigurierbar ist.

Bei einer vorteilhaften Ausgestaltung wird bei Erkennen der an dem mit dem fünften Schleifleiter verbundenen Anschlusselement anliegenden Phase abhängig von deren Vorzeichen ein jeweiliger Hardwaresteuereingang aktiviert. Von Vorteil ist dabei, dass eine große Datenübertragungsrate erreichbar ist.

Bei einer vorteilhaften Ausgestaltung wird im Gerät, insbesondere in einem Speicher des Geräts, eine Zuordnung der an dem mit dem fünften Schleifleiter verbundenen Anschlusselement jeweils anliegenden Phase und deren jeweiligen Vorzeichens zu einem jeweiligen Hardwaresteuereingang hinterlegt. Von Vorteil ist dabei, dass eine hohe Datenübertragungsrate erreichbar ist.

Bei einer vorteilhaften Ausgestaltung wird der vierte Schleifleiter mit dem vierten Anschlusselement elektrisch verbunden, der fünfte Schleifleiter mit dem fünften Anschlusselement elektrisch verbunden wird. Von Vorteil ist dabei, dass eine einfache Inbetriebnahme ausführbar ist.

Wichtige Merkmale bei der Vorrichtung sind, dass das Gerät mittels einer Schleifleitung elektrisch versorgbar ist, insbesondere wobei das Gerät auf einem Fahrzeug angeordnet ist, das parallel zur Schleifleitung bewegbar ist,
wobei die Schleifleitung Schleifleiter aufweist,
wobei die Schleifleitung zumindest einen ersten, zweiten, vierten und fünften Schleifleiter aufweist, die mit einem jeweiligen Anschlusselement des Geräts verbunden sind,
wobei das Gerät eine Meldeeinheit aufweist, die zumindest einen Schalter aufweist, mittels dessen eine der das Gerät versorgenden Phasen mit dem vierten Schleifleiter verbindbar ist, insbesondere wobei eine Diode dem Schalter in Reihe zugeschaltet ist,
wobei das Gerät eine Auswerteeinheit aufweist, welche den an der fünften Schleifleiter anliegenden Spannungsverlauf vergleicht mit dem Spannungsverlauf einer der das Gerät versorgenden Phasen, insbesondere und daraus ans Gerät gesendete Information bestimmt.

Von Vorteil ist dabei, dass Daten von der stationär angeordneten übergeordneten Steuerung ans Gerät und vom Gerät an dieselbe übertragbar sind. Die Inbetriebnahme ist besonders einfach ausführbar, da eine flexible Konfiguration des Geräts erlaubt ist. Denn die Zuordnung, welche der Phasen des Drehspannungssystems an welchem Anschlusselement, insbesondere Anschlussklemme, des Geräts elektrisch angeschlossen ist, ist frei wählbar.

Bei einer vorteilhaften Ausgestaltung weist das Gerät einen Umrichter zur Speisung des Traktionsmotors, insbesondere Elektromotors, des Fahrzeugs auf,
wobei der Umrichter von einer Steuerung steuerbar ist, welche mit der Meldeeinheit und der Auswerteeinheit verbunden ist. Von Vorteil ist dabei, dass der Antrieb des Fahrzeugs drehzahlregelbar ist.

Bei einer vorteilhaften Ausgestaltung ist an der Schleifleitung eine Meldeauswerteeinheit angeordnet, welche den an dem vierten Schleifleiter anliegenden Spannungsverlauf vergleicht mit dem Spannungsverlauf einer der das Gerät versorgenden Phasen, insbesondere und daraus vom Gerät gesendete Information bestimmt. Von Vorteil ist dabei, dass ein Datenstrom sicher übertragbar ist. Denn die Erkennung einer Information ist mit sehr guten Signal-Rausch-Verhältnis ausführbar, da nicht nur ein einzelner Spannungswert sondern ein Verlauf ausgewertet wird.

Bei einer vorteilhaften Ausgestaltung ist an der Schleifleitung eine Kommandoeinheit angeordnet, die zumindest einen Schalter aufweist, mittels dessen eine der das Gerät versorgenden Phasen mit dem fünften Schleifleiter verbindbar macht,
insbesondere wobei eine Diode dem Schalter in Reihe zugeschaltet ist. Von Vorteil ist dabei, dass Daten ans Gerät übertragbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In den Figuren ist ein Teil der Erfindung schematisch dargestellt.

Dabei ist ein Gerät auf einem Fahrzeug angeordnet, welches entlang einer Schiene bewegbar ist. Die zugehörige Anlage ist also beispielsweise eine Einschienenhängebahnanlage, wobei das Gerät 20 ein Elektrogerät ist, welches auf dem Fahrzeug angeordnet ist, wie beispielsweise eine Steuerung oder dergleichen.

Parallel zur Schiene ist eine dreiphasige Schleifleitung (SL) verlegt.

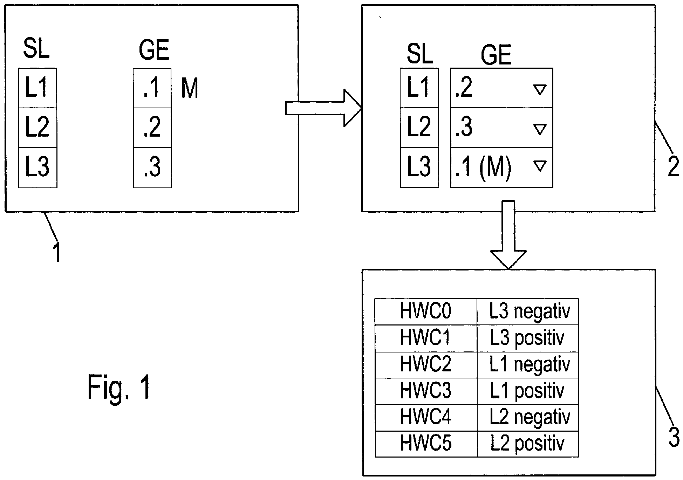

Im Ausführungsbeispiel weist die Schleifleitung (SL) mindestens fünf Schleifleiter SL auf, von denen die in Figur 1 gezeigten drei Schleifleiter SL zur Versorgung des Geräts 20 vorgesehen sind. Der vierte, in Figur 1 nicht dargestellte Schleifleiter dient für das Absenden von Informationen vom Gerät 20 über die Schleifleitung (SL) zu einer stationär angeordneten übergeordneten Steuerung. Die fünfte, in Figur 1 ebenso nicht dargestellte Schleifleitung (SL) dient für die Übermittelung von Informationen von der stationär angeordneten übergeordneten Steuerung an das Gerät 20.

Jeder der drei in Figur 1 gezeigten Schleifleiter SL weist eine jeweilige der Phasen der Drehspannungsquelle auf. Somit ist das Gerät 20 mit Drehstrom versorgbar.

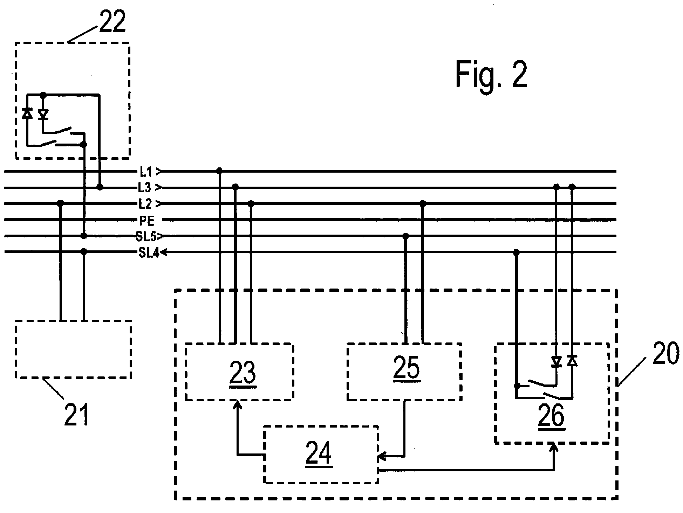

Eine der drei in Figur 1 gezeigten Schleifleiter SL ist als sogenannte Meldephase (M) vorgesehen. Diese dient also als Signalquelle für das Rückmeldesignal. Dabei weist das Gerät 20 Schalter auf, welche den positiven oder negativen Spannungsanteil der Meldephase (M), insbesondere in Figur 2 die Phase L3, mit dem vierten Schleifleiter SL4 verbindbar macht. Auf diese Weise ist Information codierbar. Zur Codierung ist ein erster Zustand das Anlegen des positiven Anteils der in der Meldephase L3 geführten Spannung an den vierten Schleifleiter SL4 verwendbar, ein zweiter Zustand das Anlegen des negativen Anteils der in der Meldephase L3 geführten Spannung an den vierten Schleifleiter SL4 und ein dritter Zustand das Nicht-Anlegen der Meldephase L3 an den vierten Schleifleiter SL4. Der jeweilige Schalter der Meldeeinheit 26 muss also nur das Verbinden ausführen oder ein Trennen ausführen. Das Verbinden muss zu den den positiven oder negativen Spannungswerten entsprechenden Zeitintervallen erfolgen.

Auf diese Weise sind Daten vom Gerät 20 codierbar und über den vierten Schleifleiter SL4 übertragbar. Da drei Zustände übermittelbar sind, ist eine höhere Datenübertragungsrate übertragbar als bei einem System mit nur zwei übermittelbaren Zuständen.

Die auf dem fünften Schleifleiter SL5 codierten Daten sind ebenso durch die Vorzeichen der jeweils angelegten Spannung einer Phase L3, also Rückmeldephase, des Drehspannungssystems codiert beziehungswiese durch das Nicht-Anlegen. Hierzu weist eine übergeordnete Steuerung oder ein stationär angeordnetes Gerät eine Kommandoeinheit 22 mit Schaltern auf, die entweder den positiven oder negativen Spannungsverlauf der ersten Phase L3 mit der fünften Schleifleitung SL5 elektrisch leitend verbindet oder - in Figur 2 nicht gezeigt - alternativ die zweite Phase mit der fünften Schleifleitung SL5 oder weiter alternativ die dritte Phase mit der fünften Schleifleitung SL5 Zwar ist von einem Mittel zur Erfassung der am fünften Schleifleiter SL5 anliegenden Spannung des Geräts 20 die Spannung und deren Vorzeichen detektierbar, jedoch ist die eineindeutige Erkennung nur ausführbar, indem die Phase, also Rückmeldephase, bekannt ist. Denn dann ist die detektierte Spannung des fünften Schleifleiters SL5 mit der Spannung der entsprechenden Phase, also Rückmeldephase, beispielswiese L3, erkennbar. Bei Vergleich mit einer anderen Versorgungsphase der Drehstromquelle würde die mit dem fünften Schleifleiter übertragene Information nicht fehlerfrei erkennbar sein.

Somit ist also notwendig, dass dem Gerät 20 bekannt gemacht ist, an welchen seiner Anschlusselemente seines Geräteeingangs GE welche jeweilige der Phasen anliegt.

Erfindungsgemäß ist das Gerät 20 somit dreiphasig versorgbar und zusätzlich sind Daten übertragbar ans Gerät 20 über den fünften Schleifleiter SL5, der zeitabschnittsweise mit einer Phase, beispielsweise L2, verbunden wird. Außerdem sind Daten vom Gerät 20 aus absendbar, indem der vierte Schleifleiter SL4 mit der Meldephase L3, also einer der drei Phasen (L1, L2, L3) der Drehspannung, verbunden wird.

Die Phasen (L1, L2, L3) der Drehspannung werden mit entsprechend verbundenen Schleifleitern (SL1, SL2, SL3) der Schleifleitung dem Gerät 20 zur Verfügung gestellt und ermöglichen die Versorgung des Geräts 20 mit elektrischer Energie. Das Gerät 20 weist Anschlusselemente, wie Anschlussklemmen, auf, welche in Figur 1 mit .1, .2 und .3 gekennzeichnet sind.

Bei der Installation wird jeweils ein Schleifleiter (SL1, SL2, SL3, SL4, SL5) der Schleifleitung (SL) mit einem jeweiligen Anschlusselement des Geräts 20 verbunden. In Figur 1 ist als beispielhafte Verdrahtung die dritte Phase L3 der Schleifleitung (SL) mit dem ersten Anschlusselement .1 des Geräts 20 verbunden. Die zweite Phase L2 der Schleifleitung (SL) ist mit dem dritten Anschlusselement .3 des Geräts 20 verbunden und die erste Phase L1 der Schleifleitung (SL) ist mit dem zweiten Anschlusselement .2 des Geräts 20 verbunden.

Das Gerät 20 weist eine elektronische Schaltung auf, die einen parametrierbaren Speicher umfasst. Somit ist bei Installation oder Inbetriebnahme die Verdrahtungskonfiguration berücksichtigbar und jedem Anschlusselement (.1, .2, .3) des Geräts 20 die entsprechende Funktion zuordenbar.

Somit wird dem Anschlusselement, mit welchem die Meldephase L3, welche in Figur 1 auch mit (M) gekennzeichnet ist, verbunden ist, die Bezeichnung ".1" zugeordnet und dieses wird nun als erstes Anschlusselement bezeichnet. Ebenso werden den beiden anderen Anschlusselementen die Bezeichnungen ".2" und ".3" zugeordnet. Das Anschlusselement .1 des Geräts 20 ist derart gekennzeichnet oder beschriftet, dass bei der Verdrahtung klar ist, dass die Meldephase (M) an das Anschlusselement zu verbinden ist. In Figur 1 ist L3 die Meldephase (M).

Im Block 2 ist die Parametrierung 2 dargestellt. Dabei wird dem Gerät 20 bekannt gemacht, welche Phase an welchem seiner Anschlusselemente angeschlossen ist. Zwar ist die Verdrahtung der nicht als Meldephasen verwendeten Phasen beliebig, jedoch wird bei der Parametrierung 2 die am jeweiligen Anschlusselement (.1, .2, .3) angeschlossene Phase (L1, L2, L3) dem Gerät 20 bekannt gemacht.

Weiter wird dann dem Vorzeichen der anliegenden Spannungswerte jeweils ein Hardwaresteuereingang zugeordnet, beispielsweise wird das negative Vorzeichen der Spannungswerte der dritten Phase L3 der Schleifleitung (SL) dem Hardwaresteuereingang HWC0 zugeordnet und das positive Vorzeichen der Spannungswerte der dritten Phase L3 der Schleifleitung (SL) dem Hardwaresteuereingang HWC1 zugeordnet. Die weiteren Zuordnungen sind aus Figur 1 ersichtlich. Diese Zuordnung ist in Figur 1 im Block 3 dargestellt und in der elektronischen Schaltung mittels Software ausgeführt. Zum Erkennen der jeweiligen Phase wird die am fünften Schleifleiter von einem Sensor erfasste Spannung verglichen mit zumindest einer der Phasen (L1, L2, L3). Sobald durch Vergleich erkannt wurde, welcher Phase das erfasste Spannungssignal am meisten ähnelt und welchem Vorzeichen der Verlauf entspricht, wird der entsprechende Hardwareeingang (HWC0, HWC1, HWC3, HWC4, HWC5) gesetzt. Die Zuordnung wird in Figur 1 in der internen Zuordnungstabelle 3 gespeichert.

Somit ist die Verdrahtung, also die Verbindungen, zwischen des Phasen (L1, L2, L3) der Schleifleitung (SL) und den Anschlusselementen (.1, .2, .3) beliebig ausführbar mit Ausnahme des Verbindens der Meldephase L3 mit dem Anschlusselement .1. Das Gerät 20 wird bei jeder Verdrahtung, also eineindeutigen Zuordnung der Phasen (L1, L2, L3) der Schleifleitung (SL) zu den Anschlusselementen (.1, .2, .3), versorgt aus den Versorgungsphasen (L1, L2, L3). Nach Verbinden der Meldephase (M) ans Anschlusselement des Geräts 20, insbesondere an das erste Anschlusselement (.1) des Geräts 20, ist die Kommunikationsverbindung betreibbar, indem durch zeitabschnittsweises Verbinden des mit dem vierten Schleifleiter SL4 verbundenen Anschlusselements des Geräts 20 mit der Meldephase L3, also mit dem ersten Anschlusselement (.1) des Geräts 20, eine Information codierbar ist.

Die Zuordnung der Phasen (L1, L2, L3) des über die Schleifleitung (SL) das Gerät 20 versorgenden Drehspannungssystems zu den Anschlusselementen (.1, .2, .3) wird bei der Parametrierung 2 einem elektronischen Speicher des Geräts 20 bekannt gemacht, so dass die Dekodierung der über den fünften Schleifleiter empfangenen Information ausführbar ist..

Die genannten, im Gerät 20 angeordneten Schalter sind in einer Meldeeinheit 26 des Geräts 20 angeordnet. Die Meldeeinheit ist Teil der elektronischen Schaltung des Geräts 20. Ein weiterer Teil der elektronischen Schaltung ist ein Umrichter 23, insbesondere Wechselrichter, zur Speisung des Antriebs des Fahrzeugs. Somit weist das Fahrzeug einen drehzahlregelbaren Antrieb auf.

Der Umrichter 23 wird von einer Steuerung 24, insbesondere Steuerlogik, angesteuert. Mit der Steuerung 24 ist eine Kommandoeinheit 22 verbunden, welche die am fünften Schleifleiter SL5 anliegende Spannung vergleicht mit der an der Phase L2 anliegenden Spannung und daraus bestimmt, welcher der Hardwareeingänge (HWC0, HWC1, HWC3, HWC4, HWC5) zu setzen ist, insbesondere wird bei positivem Spannungsverlauf der Phase L2 der Eingang HWC5 der Steuerung 24 gesetzt und bei negativem Spannungsverlauf der Phase L2 der Eingang HWC4.

Jedem der genannten Schalter ist eine Diode in Reihe zugeschaltet. Dieser Reihenschaltung ist jeweils eine weitere Reihenschaltung parallel zugeschaltet, wobei diese weitere Reihenschaltung ebenfalls eine entgegengesetzt orientierte Diode und einen Schalter aufweist. Auf diese Weise ist mit dem erstgenannten Schalter der positive und mit dem anderen Schalter der negative Anteil des an der das Gerät versorgenden Phase anliegenden Spannungsverlaufs mit der vierten beziehungsweise fünften Schleifleiter verbindbar. Der positive und negative Anteil des Spannungsverlaufs ist also jeweils separat weiterführbar.

### Bezugszeichenliste

1 Verdrahtung
2 Parametrierung
3 interne Zuordnungstabelle
20 Gerät
21 Meldungsauswerteeinheit
22 Kommandoeinheit
23 Umrichter, insbesondere Wechselrichter, zur Speisung des Antriebs des Fahrzeugs
24 Steuerung, insbesondere Steuerlogik,
25 Auswerteeinheit
26 Meldeeinheit
SL Schleifleiter
GE Geräteeingang
M Meldephase

## Patentansprüche

1. Verfahren zum Herstellen, insbesondere Konfigurieren, eines Systems, umfassend eine Schleifleitung und ein Gerät (20),
wobei das Gerät (20) mittels der Schleifleitung versorgbar ist und Informationen über die Schleifleitung vom Gerät (20) sendbar und/oder empfangbar sind,
wobei die Schleifleitung zumindest einen ersten, zweiten, dritten, vierten und fünften Schleifleiter (SL1, SL2, SL3, SL4, SL5) aufweist, die mit einem jeweiligen Anschlusselement (.1, .2, .3, .4, .5) des Geräts (20) verbunden sind,
wobei der erste und zweite Schleifleiter eine jeweilige Phase der das Gerät (20) versorgenden Wechselspannung aufweist,
wobei der vierte Schleifleiter zum Senden von Information vorgesehen ist und der fünfte Schleifleiter zum Empfangen von Information vorgesehen ist,
**wobei** eine der Phasen, insbesondere also die als Meldephase (M) fungierende Phase, mit einem ersten Anschlusselement elektrisch verbunden wird, insbesondere wobei das erste Anschlusselement mit einer entsprechenden Markierung oder Kennzeichnung versehen wird bei Herstellung des Geräts (20),
**dadurch gekennzeichnet, dass**
ein steuerbarer Schalter, insbesondere Halbleiterschalter, des Geräts (20) das erste Anschlusselement zeitabschnittsweise elektrisch verbindet mit dem mit dem vierten Schleifleiter verbundenen Anschlusselement oder diese Verbindung trennt,
insbesondere wobei dem Schalter zumindest eine Diode in Reihe zugeordnet ist.

2. Verfahren nach Anspruch 1,
**dadurch gekennzeichnet, dass**
die am fünften Schleifleiter anliegende Spannung einem Mittel zur Erfassung von Spannung zugeführt wird und der erfasste Spannungsverlauf verglichen wird mit dem Spannungsverlauf zumindest einer der das Gerät (20) versorgenden Phasen, insbesondere mit zumindest einer der Phasen der das Gerät (20) versorgenden Wechselspannung, verglichen wird
und daraus die am fünften Schleifleiter jeweils anliegende Phase der Wechselspannung und/oder das Vorzeichen des Spannungsverlaufs einer jeweils am fünften Schleifleiter anliegenden Phase der Wechselspannung bestimmt wird,
insbesondere wobei eine stationär angeordnete elektronische Schaltung, insbesondere übergeordnete Steuerung (24), den fünften Schleifleiter zeitabschnittsweise mit einer der Phasen elektrisch verbindet.

3. Verfahren nach mindestens einem der vorangegangenen Ansprüche,
**dadurch gekennzeichnet, dass**
bei der Inbetriebnahme des Geräts (20) in einem Speicher des Geräts (20) die Zuordnung der jeweiligen Phase zu einem jeweiligen Anschlusselement hinterlegbar ist, insbesondere als Parameter.

4. Verfahren nach mindestens einem der vorangegangenen Ansprüche,
**dadurch gekennzeichnet, dass**
bei Erkennen der an dem mit dem fünften Schleifleiter verbundenen Anschlusselement anliegenden Phase abhängig von deren Vorzeichen ein jeweiliger Hardwaresteuereingang aktiviert wird.

5. Verfahren nach mindestens einem der vorangegangenen Ansprüche,
**dadurch gekennzeichnet, dass**
im Gerät (20), insbesondere in einem Speicher des Geräts (20), eine Zuordnung der an dem mit dem fünften Schleifleiter verbundenen Anschlusselement jeweils anliegenden Phase und deren jeweiligen Vorzeichens zu einem jeweiligen Hardwaresteuereingang hinterlegt wird.

6. Verfahren nach mindestens einem der vorangegangenen Ansprüche,
**dadurch gekennzeichnet, dass**
der vierte Schleifleiter mit dem vierten Anschlusselement elektrisch verbunden wird, der fünfte Schleifleiter mit dem fünften Anschlusselement elektrisch verbunden wird

7. Vorrichtung zur Durchführung des Verfahrens nach mindestens einem der vorangegangenen Ansprüche,
**wobei** das Gerät (20) mittels einer Schleifleitung elektrisch versorgbar ist, insbesondere wobei das Gerät (20) auf einem Fahrzeug angeordnet ist, das parallel zur Schleifleitung bewegbar ist,
wobei die Schleifleitung Schleifleiter aufweist,
wobei die Schleifleitung zumindest einen ersten, zweiten, vierten und fünften Schleifleiter (SL1, SL2, SL3, SL4, SL5) aufweist, die mit einem jeweiligen Anschlusselement (.1, .2, .3, .4, .5) des Geräts (20) verbunden sind,
**dadurch gekennzeichnet, dass**
das Gerät (20) eine Meldeeinheit (26) aufweist, die zumindest einen Schalter aufweist, mittels dessen eine der das Gerät (20) versorgenden Phasen mit dem vierten Schleifleiter verbindbar ist, insbesondere wobei eine Diode dem Schalter in Reihe zugeschaltet ist,
wobei das Gerät (20) eine Auswerteeinheit (25) aufweist, welche den an der fünften Schleifleiter anliegenden Spannungsverlauf vergleicht mit dem Spannungsverlauf einer der das Gerät (20) versorgenden Phasen, insbesondere und daraus ans Gerät (20) gesendete Information bestimmt.

8. Vorrichtung nach Anspruch 7,
**dadurch gekennzeichnet, dass**
das Gerät (20) einen Umrichter (23) zur Speisung des Traktionsmotors, insbesondere Elektromotors, des Fahrzeugs aufweist,
wobei der Umrichter (23) von einer Steuerung (24) steuerbar ist, welche mit der Meldeeinheit (26) und der Auswerteeinheit (25) verbunden ist.

9. Vorrichtung nach Anspruch 7 oder 8,
**dadurch gekennzeichnet, dass**
an der Schleifleitung eine Meldeauswerteeinheit angeordnet ist, welche den an dem vierten Schleifleiter anliegenden Spannungsverlauf vergleicht mit dem Spannungsverlauf einer der das Gerät (20) versorgenden Phasen, insbesondere und daraus vom Gerät (20) gesendete Information bestimmt.

10. Vorrichtung nach einem der Ansprüche 7 bis 9,
**dadurch gekennzeichnet, dass**
an der Schleifleitung eine Kommandoeinheit (22) angeordnet ist, die zumindest einen Schalter aufweist, mittels dessen eine der das Gerät (20) versorgenden Phasen mit dem fünften Schleifleiter verbindbar macht,
insbesondere wobei eine Diode dem Schalter in Reihe zugeschaltet ist.

## Claims

1. Method for producing, in particular configuring, a system, comprising a contact line and an apparatus (20),
wherein the apparatus (20) is able to be supplied by means of the contact line, and information is transmittable and/or receivable by the apparatus (20) via the contact line,
wherein the contact line has at least a first, second, third, fourth and fifth contact conductor (SL1, SL2, SL3, SL4, SL5) which are connected to a respective connector element (.1, .2, .3, .4, .5) of the apparatus (20),
wherein the first and second contact conductor have a respective phase of the AC voltage supplying the apparatus (20),
wherein the fourth contact conductor is provided for transmitting information and the fifth contact conductor is provided for receiving information,
wherein one of the phases, in particular therefore the phase acting as signalling phase (M), is electrically connected to a first connector element, in particular wherein the first connector element is provided with a corresponding marking or identification when producing the apparatus (20),
**characterised in that**
a controllable switch, in particular semiconductor switch, of the apparatus (20) electrically connects the first connector element for periods of time to the connector element connected to the fourth contact conductor or breaks this connection,
in particular wherein at least one diode is assigned in series to the switch.

2. Method according to claim 1,
**characterised in that**
the voltage applied to the fifth contact conductor is fed to a means for detecting voltage and the detected voltage characteristic is compared with the voltage characteristic of at least one of the phases supplying the apparatus (20), in particular is compared with at least one of the phases of the AC voltage supplying the apparatus (20),
and from that the phase of the AC voltage applied in each case to the fifth contact conductor and/or the algebraic sign of the voltage characteristic of a phase of the AC voltage applied in each case to the fifth contact conductor is determined,
in particular wherein a stationarily arranged electronic circuit, in particular higher-order control (24), electrically connects the fifth contact conductor for periods of time to one of the phases.

3. Method according to at least one of the preceding claims, **characterised in that**
upon startup of the apparatus (20), the assignment of the respective phase to a respective connector element is able to be stored, in particular as a parameter, in a memory of the apparatus (20).

4. Method according to at least one of the preceding claims, **characterised in that**
upon recognition of the phase applied to the connector element connected to the fifth contact conductor, a respective hardware control input is activated as a function of the algebraic sign of the phase.

5. Method according to at least one of the preceding claims, **characterised in that**
an assignment of the phase applied in each case to the connector element connected to the fifth contact conductor, and its respective algebraic sign, to a respective hardware control input, is stored in the apparatus (20), in particular in a memory of the apparatus (20).

6. Method according to at least one of the preceding claims, **characterised in that**
the fourth contact conductor is electrically connected to the fourth connector element, the fifth contact conductor is electrically connected to the fifth connector element.

7. Device for carrying out the method according to at least one of the preceding claims,
wherein the apparatus (20) is able to be electrically supplied by means of a contact line, in particular wherein the apparatus (20) is arranged on a vehicle which is movable parallel to the contact line,
wherein the contact line has contact conductors,
wherein the contact line has at least a first, second, fourth and fifth contact conductor (SL1, SL2, SL3, SL4, SL5) which are connected to a respective connector element (.1, .2, .3, .4, .5) of the apparatus (20),
**characterised in that**
the apparatus (20) has a signalling module (26) which has at least one switch, by means of which one of the phases supplying the apparatus (20) is connectable to the fourth contact conductor, in particular wherein a diode is connected in series to the switch,
wherein the apparatus (20) has an evaluation unit (25) which compares the voltage characteristic applied to the fifth contact conductor with the voltage characteristic of one of the phases supplying the apparatus (20), in particular and from that determines information transmitted to the apparatus (20).

8. Device according to claim 7,
**characterised in that**
the apparatus (20) has a converter (23) for feeding the traction motor, in particular electric motor, of the vehicle,
wherein the converter (23) is controllable by a control (24) which is connected to the signalling module (26) and the evaluation unit (25).

9. Device according to claim 7 or 8,
**characterised in that**
arranged at the contact wire is a signal evaluation unit which compares the voltage characteristic applied to the fourth contact conductor with the voltage characteristic of one of the phases supplying the apparatus (20), in particular and from that determines information transmitted by the apparatus (20).

10. Device according to one of claims 7 to 9,
**characterised in that**
arranged at the contact line is a command unit (22) which has at least one switch, by means of which one of the phases supplying the apparatus (20) is made connectable to the fifth contact conductor,
in particular wherein a diode is connected in series to the switch.

## Revendications

1. Procédé de fabrication, en particulier de configuration, d'un système comprenant une ligne de contact et un appareil (20),
sachant que l'appareil (20) peut être alimenté au moyen de la ligne de contact et que des informations peuvent être transmises et/ou reçues par l'appareil (20) par l'intermédiaire de la ligne de contact,
sachant que la ligne de contact présente au moins un premier, un deuxième, un troisième, un quatrième et un cinquième conducteur de contact (SL1, SL2, SL3, SL4, SL5), qui sont reliés à un élément de raccordement respectif (.1, .2, .3, .4, .5) de l'appareil (20),
sachant que le premier conducteur de contact et le deuxième conducteur de contact présentent une phase respective de la tension alternative alimentant l'appareil (20), sachant que le quatrième conducteur de contact est prévu pour transmettre des informations et que le cinquième conducteur de contact est prévu pour recevoir des informations,
sachant qu'une des phases, en particulier la phase servant de phase de signalisation (M), est reliée électriquement à un premier élément de raccordement, sachant en particulier que le premier élément de raccordement est pourvu d'un marquage ou d'un repérage correspondant lors de la fabrication de l'appareil (20),
**caractérisé en ce qu'**un commutateur asservissable de l'appareil (20), en particulier un commutateur à semi-conducteur, établit ou interrompt par intervalles de temps une liaison électrique entre le premier élément de raccordement et l'élément de raccordement relié au quatrième conducteur de contact,
sachant en particulier qu'au moins une diode est mise en circuit en série avec le commutateur.

2. Procédé selon la revendication 1, **caractérisé en ce que** la tension électrique appliquée au cinquième conducteur de contact est apportée à un moyen de détection de tension, et l'allure de tension détectée est comparée à l'allure de tension d'au moins une des phases alimentant l'appareil (20), en particulier d'au moins une des phases de la tension alternative alimentant l'appareil (20),
à partir de quoi l'on détermine la phase de la tension alternative qui est respectivement appliquée au cinquième conducteur de contact, et/ou le signe de l'allure de tension d'une phase de la tension alternative respectivement appliquée au cinquième conducteur de contact,
sachant en particulier qu'un circuit électronique disposé stationnairement, en particulier une commande principale (24), relie électriquement par intervalles de temps le cinquième conducteur de contact à une des phases.

3. Procédé selon au moins une des revendications précédentes, **caractérisé en ce que**, lors de la mise en service de l'appareil (20), l'association de la phase respective à un élément de raccordement respectif peut être enregistrée dans une mémoire de l'appareil (20), en particulier sous forme de paramètre.

4. Procédé selon au moins une des revendications précédentes, **caractérisé en ce que**, lors de la reconnaissance de la phase appliquée à l'élément de raccordement relié au cinquième conducteur de contact, une entrée de commande de hardware respective est activée en fonction du signe de ladite phase.

5. Procédé selon au moins une des revendications précédentes, **caractérisé en ce qu'**une association, à une entrée de commande de hardware respective, de la phase respectivement appliquée à l'élément de raccordement relié au cinquième conducteur de contact et du signe respectif de ladite phase et enregistrée dans l'appareil (20), en particulier dans une mémoire de l'appareil (20).

6. Procédé selon au moins une des revendications précédentes, **caractérisé en ce que**
le quatrième conducteur de contact est relié électriquement au quatrième élément de raccordement,
le cinquième conducteur de contact est relié électriquement au cinquième élément de raccordement.

7. Dispositif pour la mise en oeuvre du procédé selon au moins une des revendications précédentes,
sachant que l'appareil (20) peut être alimenté électriquement au moyen d'une ligne de contact, sachant en particulier que l'appareil (20) est disposé sur un véhicule qui peut être déplacé parallèlement à la ligne de contact,
sachant que la ligne de contact présente des conducteurs de contact,
sachant que la ligne de contact présente au moins un premier, un deuxième, un quatrième et un cinquième conducteur de contact (SL1, SL2, SL3, SL4, SL5), qui sont reliés à un élément de raccordement respectif (.1, .2, .3, .4, .5) de l'appareil (20), **caractérisé en ce que** l'appareil (20) présente une unité de signalisation (26) qui présente au moins un commutateur au moyen duquel une des phases alimentant l'appareil (20) peut être reliée au quatrième conducteur de contact, sachant en particulier qu'une diode est mise en circuit e série avec le commutateur,
sachant que l'appareil (20) présente une unité d'évaluation (25) qui compare l'allure de tension appliquée au cinquième conducteur de contact à l'allure de tension d'une des phases alimentant l'appareil (20), à partir de quoi elle détermine l'information transmise à l'appareil (20).

8. Dispositif selon la revendication 7, **caractérisé en ce que** l'appareil (20) présente un convertisseur (23) pour alimenter le moteur de traction du véhicule, moteur électrique notamment,
sachant que le convertisseur (23) peut être commandé par une commande (24) qui est reliée à l'unité de signalisation (26) et à l'unité d'évaluation (25).

9. Dispositif selon la revendication 7 ou 8, **caractérisé en ce qu'**une unité d'évaluation et de signalisation est disposée sur la ligne de contact, unité qui compare l'allure de tension appliquée au quatrième conducteur de contact à l'allure de tension d'une des phases alimentant l'appareil (20), à partir de quoi elle détermine l'information transmise par l'appareil (20).

10. Dispositif selon l'une des revendications 7 à 9, **caractérisé en ce qu'**une unité de commandement (22) est disposée sur la ligne de contact, unité qui présente au moins un commutateur au moyen duquel une des phases alimentant l'appareil (20) peut être reliée au cinquième conducteur de contact,
sachant en particulier qu'une diode est mise en circuit en série avec le commutateur.
